# EUROPEAN PATENT APPLICATION

(11) **EP 2 474 967 A1**
(43) Date of publication of application: **11.07.2012**
(21) Application number: 11150307.4
(22) Date of filing: 06.01.2011
(51) Int. Cl.: G09F 13/20, G09F 13/22

(54) **Luminescent-OLED light collector signage panel**

(71) Applicant: Koninklijke Philips Electronics N.V., 5621 BA Eindhoven (NL)
(72) Inventor: The designation of the inventor has not yet been filed
(74) Representative: Volmer, Georg

(57) **Abstract**

The invention provides a light collector (1) comprising a luminescent material (20) element, a discontinuous semi-transparent layer (40) adjacent to a first side of the luminescent material element (20), wherein due to the discontinuity of the semi-transparent layer (40) at least one first portion (21) of the luminescent material element (20) covered by the semi-transparent layer (40) and at least one second portion (21) of the luminescent material (20) element not covered by the semi-transparent layer (40) are formed, and a light generating means (10) arranged at a second side of the luminescent material element (20). Further, a method for concentrating light in a light collector (1) is provided, comprising the following method steps: capturing light from the environment by means of a luminescent material (20), concentrating the light in the luminescent material (20) by means of a semi-transparent layer (40) arranged on the luminescent material (20) and light generating means (10), emitting the light in a pre-determined area of the light collector (1) by means of an out-coupling structure (30) so as to generate a pre-determined light emitting image.

## Description

### FIELD OF THE INVENTION

The invention relates to a light collector having a luminescent material element, a semi-transparent layer, and a light generating means as e.g. an organic light emitting diode (OLED). Further, a signage panel having a luminescent material and e.g. an OLED is provided as well as a method for concentrating light by capturing, concentrating, and re-emitting the light in and from a light collector.

### BACKGROUND OF THE INVENTION

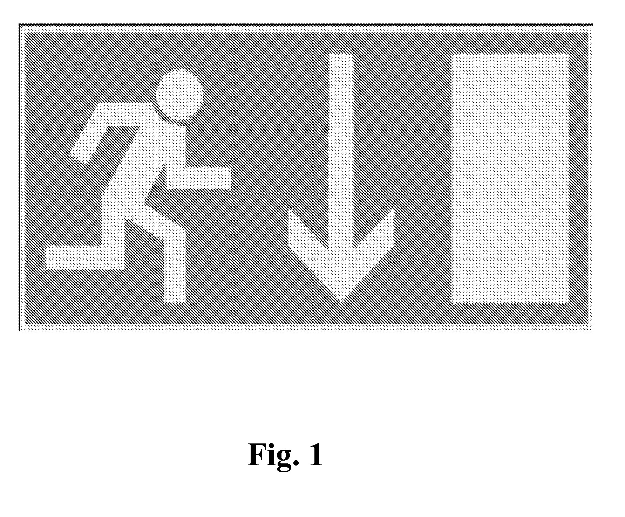

Signage systems are for example directional signs in buildings and roads, signs outside of buildings, advertisement boards, information boards etc. and may also be used for decorative purposes. Signage systems provide images with motives as depicted for example in Fig. 1. These signage systems are usually provided with a backlight or are equipped with a side emissive lamp in order to be easier seen by the people passing by.

The lamps functioning as backlights or as side emissive lamps usually emit the light continuously once turned on so that their energy consumption is quite high. Further, if there is a clock timer switching the lamps off during daylight to save energy, the images of the signage systems cannot be clearly seen, for example, because of an decreased contrast causing the image looking dull.

In view of this, there is a need to provide means for a signage system enabling an appropriate brightness of the image so that the signage and its meaning can be easier recognized while at the same time the energy consumption is reduced.

### SUMMARY OF THE INVENTION

The general concept behind the invention is the particular configuration of a light emitting structure and a patterned (and thus discontinuous) semi-transparent layer between which a luminescent material is arranged so that environmental light incident through the semi-transparent layer is concentrated and (re-)emitted through the pattern. In doing so, an image formed by the pattern of the semi-transparent layer may provide an increased brightness without the need of an additional backlight or side emissive lamp.

According to the invention, a light collector is provided, comprising a luminescent material element, a discontinuous semi-transparent layer, and light generating means. The semi-transparent layer is adjacent to a first side of the luminescent material element and - due to the discontinuity of the semi-transparent layer - at least one first portion of the luminescent material element covered by the semi-transparent layer and at least one second portion of the luminescent material element not covered by the semi-transparent layer are formed. The OLED is arranged at a second side of the luminescent material element.

A (photo-)luminescent material is a material absorbing photons and then re-radiating/emitting photons. A luminescent material may be a fluorescent material (immediate re-radiation of - usually - low energy photons) or a phosphorescent material (lower intensity of the re-radiated photon, but re-emission of the light for up to several hours).

The semi-transparent layer may be a semi-transparent white sheet, particularly a semi-transparent diffusive white sheet. The semi-transparent layer is a discontinuous layer, meaning that the semi-transparent layer arranged on top of an element or layer provides portions covering the element or layer and portions not covering the element or layer. In this example, the portions of the element or layer not covered by the semi-transparent layer are seen from a top view of the whole structure. The semi-transparent layer may be a layer which lets incident light from the environment pass through, whereas emitted light from the layers opposite to the incident side is reflected. Hence, the light in the light collector may be further concentrated and more easily directed before leaving the light collector.

A light generating means may be an organic light emitting diode (OLED) or a transparent sheet (e.g. plastic) with, e.g., a light emitting diode (LED) or a compact fluorescent lamp (CFL), providing side in-coupling of light.

An OLED comprises two electrodes between which an optoelectronic material is sandwiched. For example, the optoelectronic material is an electroluminescent material so that - when a current is made to flow between the electrodes, the organic electroluminescent material emits light. The optoelectronic material is an organic material, for example a polymeric material or a material with small organic molecules commonly known in the art. In an embodiment, at least one of the electrodes is a light transparent electrode (e.g. the front electrode seen from a top view or light incident side) and is made of a transparent electrically conducting material such as ITO (indium-tin oxide) or may be a semi-transparent electrode. In this case, the second electrode (the back electrode) may be made of a reflective electrically conducting material such as a metal material. In an embodiment, the back electrode may be a light transparent or semi-transparent electrode as the front electrode. According to the invention, the OLED may further comprise a light transparent glass/plastic substrate and/or cover, for example arranged on top of the front electrode (thus arranged between the front electrode and the luminescent material element) and/or at the rear side of the back electrode, for example if the back electrode is a (semi)transparent electrode. The structure of a LED is known in the art and will not be further discussed in this connection. A CFL useful for the invention is, for example, described in "Diffractive Optics for Mobile Solutions: Light Incoupling and Polarization Control with Light Guides", Pasi Laakkonen et al., Japanese Journal of Applied Physics, Vol. 47, No. 8, 2008, pp. 6635-6641.

A side in-coupling of any additional light may, for example, be realized by providing a transparent sheet arranged below the luminescent material element (from an environment light incident view) coupled with a lamp, e.g. a LED or a CFL, wherein the lamp is provided at one side of the transparent sheet. In this embodiment, the light of the lamp may be coupled into the transparent sheet in a direction parallel to the interface between the transparent sheet and the luminescent material element in order to provide a side in-coupling of light.

In an embodiment of the invention, the light generating means may also function as a light sensor in order to detect the amount of environment light and turns on the light generating means to the required level depending on the detected amount of environment light. Alternatively, a light sensor may be a separate component of the light collector and provided in addition to the light generating means.

In an embodiment of the invention, the light collector may further comprise a solar cell, for example, arranged at the rear side of the light generating means, seen from a top view. The solar cell may be used to energize the light generating means by generating a photoelectric current. In particular, the solar cell may comprise or be combined with a storage battery; in this way, the solar cell may be adapted to store electrical energy during daytime and to energize the light generating means during night time or if the environmental light incident on the light collector decreases. In this embodiment, the back electrode of the OLED may be a light transparent electrode, and a substrate of the OLED arranged at its rear side may be sandwiched by the back electrode and the solar cell.

According to an embodiment of the invention, the first side of the luminescent material element is a light incident side. That means that light of the environment of the light collector is received at the first side of the luminescent material, for example, to be captured therein. The opposite side of the luminescent material element, for example if the luminescent material element is a layer, is the rear side or back side of the luminescent material element. According to the present invention, the light incident side of, for example, the light collector is the side providing the pattern formed by the semi-transparent layer.

In an embodiment, the luminescent material element is adjacent to the semi-transparent layer, meaning that there is a direct contact between those. In an embodiment, the luminescent material may be adjacent (i.e. in direct contact) to the light generating means or merely arranged between the light generating means and the semi-transparent layer. In the latter case, further layers/elements may be provided between the luminescent material element and the light generating means.

According to an embodiment of the invention, the discontinuous semi-transparent layer provides a pre-determined (well-defined) pattern. For example, the pattern may provide motives (as shown exemplary in Fig. 1) pointing people in a particular direction or any other kind of information, as e.g. numbers or letters or a whole text.

According to an embodiment of the invention, the light collector comprises an out-coupling structure. The out-coupling structure may be at least one lens, hole, pyramid etc or a combination of one or more of those. The out-coupling structure functions to particularly direct the light emitted from the light collector in a pre-defined direction, for example, by concentrating the light.

According to an embodiment of the invention, the out-coupling structure is provided at at least one second portion of the luminescent material element. The second portion of the luminescent material element is not covered by the semi-transparent layer so that the light incident surface of the luminescent material is not in contact with the semi-transparent layer at the at least one second portion. For example, the out-coupling structure may be arranged at or provided in contact to the second portion of the luminescent material. In an embodiment, the out-coupling structure and the luminescent material element are integrally formed and/or made of the same material.

According to an embodiment of the invention the out-coupling structure is a light diffusing layer arranged between the luminescent material element and the light generating means. For example, the light generating means may be in contact with (adjacent to) the out-coupling structure and/or the luminescent material contacts the light diffusing layer.

According to an embodiment of the invention, the light generating means is arranged between the luminescent material element and a further luminescent material element. In this case, a two-side emission of the light collector may be achieved: for example, besides the out-coupling structure as discussed above, a further out-coupling structure may be arranged between the second luminescent material element and the light generating means. Alternatively or additionally, an out-coupling structure is provided at at least one second portion of the further luminescent material element, wherein the second portion is a portion similar to the second portion as discussed above with reference to the (first) luminescent material element. In particular, a further discontinuous semi-transparent layer may be provided forming the second portion similar to the discussion above. In an embodiment, a symmetrical light collector may be obtained providing the light generating means in the very middle of the light collector and having the semi-transparent layers and the luminescent layers as well as the out-coupling structures arranged in the same sequence, if seen from the middle of the light collector.

The invention also provides a signage panel comprising at least one of the light collectors as discussed above. In this case, a signage system is provided having an increased brightness even if no additional light is emitted from the light generating means.

The invention also provides a signage panel comprising a luminescent material element on a light generating means. The light generating means may be an OLED or may be provided by a transparent sheet (e.g. plastic) having a side in-coupling lamp (e.g. LED or CFL) as discussed above. The particular combination of (a) a luminescent material element capturing and concentrating incident light from the environment (of the light collector) and re-emitting light and (b) a light generating means radiating/emitting light in a controlled manner, for example, by being energized by current flow, enables that the signage panel provides an appropriate brightness at daytime or nighttime.

According to an embodiment of the invention, the luminescent material element and the light generating means of the signage panel are provided in a layered configuration and the luminescent material element covers a light incident side of the light generating means. If providing the luminescent material element as a layer, the thickness of the whole structure may be decreased and the manufacturing process may be faster by easily laminating/depositing the particular layers.

According to an embodiment of the invention, the signage panel comprises a solar cell adapted so energize the light generating means. For example, the solar cell may be provided at the rear/back side of the light generating means. In this case, the light generating means may be transparent, for example, may be formed from transparent layers.

The invention also provides a signage panel system comprising at least one of the signage panels as discussed above, a light sensor adapted to determine the light condition of an environment (of the signage panel), and adjusting means adapted to control light emission of the signage panel depending on the result of the determination of the light condition. The light sensor may, for example, be provided by the light generating means itself, e.g., if the light generating means is an OLED or a LED. For example, when positively biased, the diode functions as a light emitter, when negatively biased, the diode functions as a photodiode.

Additionally or alternatively, a light sensor may be provided as separate component of the signage panel system. Depending on the detected values of the light sensor characterizing the amount of the environmental light, adjusting means (e.g. a processor) may control the light emission of the light generating means, for example, by switching the light generating means on and/or off depending on the detected values.

The invention also provides a method for concentrating light in a light collector. The method comprises capturing light from the environment by means of a luminescent material, concentrating the light in the luminescent material by means of a semi-transparent layer arranged on the luminescent material and a light generating means, and emitting the light in a pre-determined area of the light collector by means of an out-coupling structure so as to generate a pre-determined light emitting image.

For example, the light generating means may concentrate the light in the luminescent material by providing a reflective back electrode (for example, if an OLED is used as light generating means) reflecting incident light back into the luminescent material.

The pre-determined are into which the light is emitted from the luminescent material and/or the light generating means may be the at least one second portion of the luminescent material (element) as discussed above.

Further, the features and their functions as discussed above in connection with the description of the light collector and the signage panel (system) may also apply to the method of the invention.

According to an embodiment of the invention, the method comprises the step of emitting additional light by the light generating means. For example, the light from the environment may not suffice to provide an appropriate brightness; in this case, the light generating means may emit additional light to supplement the light emission of the light collector.

According to an embodiment of the invention, the method comprises the step of adjusting the quantity of the additional light emission of the light generating means depending on a determination of the light condition (of the environment) by a light sensor. For example, the light sensor may determine a difference between the actual light condition and an optimal light condition characterized by reference values. Hence, the amount of additional light to be emitted by the light generating means to supplement the light emission of the luminescent material element may be precisely adjusted on the basis of the determined difference between actual and optimal light condition.

In the following, the invention will be described by means of particular embodiments.

### BRIEF DESCRIPTION OF THE DRAWINGS

Fig. 1 depicts an example of a signage panel;
Fig. 2 schematically shows a cross-section through a light collector of a first embodiment using an OLED as light emitting means;
Fig. 3 schematically shows a cross-section through a light collector of a second embodiment using an OLED as light emitting means;
Fig. 4 schematically shows a cross-section through a light collector of a third embodiment using an OLED as light emitting means; and
Fig. 5 schematically shows a cross-section through a light collector of a fourth embodiment using an OLED as light emitting means.

### DETAILED DESCRIPTION OF EMBODIMENTS

Fig. 1 depicts an example of a signage panel, for example, for pointing to an emergency exit. The image of the signage comprises, e.g., three elements (in Fig. 1: a running man, an arrow, and a rectangle). According to the invention, elements of an image may be formed by using a discontinuous semi-transparent layer on top of a luminescent material element so that portions are formed in which the luminescent material is not covered by the semi-transparent layer. These portions not covered by the semi-transparent layer may then appear as the elements of the image of the signage.

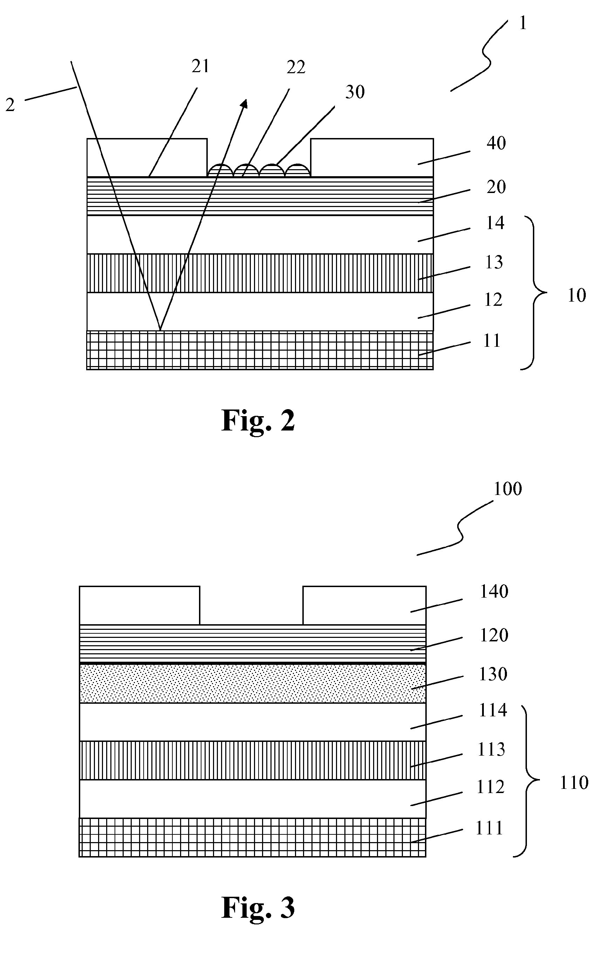

Fig. 2 schematically shows a light collector 1 comprising an OLED 10 and a luminescent material element 20 arranged thereon. In particular, the luminescent material element is in contact with a transparent cover 14 (e.g. glass, plastic, or thin film encapsulation) of the OLED 10. The OLED further comprises a front electrode 13 which is made of a transparent material so that incident light 2 may pass through the cover 14 and the front electrode 13 into the organic optoelectronic material 12 of the OLED 10. The back electrode 11 is arranged at the rear side of the light collector 1, that means opposite to the light incident side (defined by the incident light 2). The back electrode 11 may contact the organic optoelectronic material 12 and may be a reflective electrode in order to reflect the incident light back into and/or through the luminescent material element 20. In doing so, the incident light 2 is concentrated by means of the luminescent material element 20 and the OLED 10. The light collector 1 further comprises a semi-transparent layer 40 which is a discontinuous layer forming first portions 21 of the luminescent material covered by the semi-transparent layer 40 and second portions 22 of the luminescent material not covered by the semi-transparent layer 40. In the example shown in Fig. 1, the out-coupling structure 30 is provided in the second portion 22 of the luminescent material element 20 and is made of the same material as the luminescent material element 20. In general, according to the invention, the out-coupling structure is configured to collect and/or direct the light emission in a pre-defined direction. In an embodiment of the invention, the components and elements of the light collector may generally be provided in a layered structure.

Fig. 3 schematically shows a light collector 100 comprising an OLED 110 having a back electrode 111, an organic optoelectronic material 112, a front electrode 113, and a cover 114 essentially providing the same properties as described with reference to Fig. 2. Further, a luminescent material layer 120 and a discontinuous semi-transparent layer 140 are also provided in a similar way as discussed above. However, in contrast to the light collector 1 shown in Fig. 2, the light collector 100 in Fig. 3 has a light diffusing layer 130 as an out-coupling structure, wherein the light diffusing layer 130 is arranged between the OLED 110 and the luminescent material element 120. In particular, the light diffusing layer 130 contacts the luminescent material element 120 at a first surface and contacts the cover 114 of the OLED 110 at a second surface opposite to the first surface. The light diffusing layer 130 provides for a concentration and collection of the light in the light collector 100 and thus enhances the efficiency of light capturing and light emission of the light collector 100.

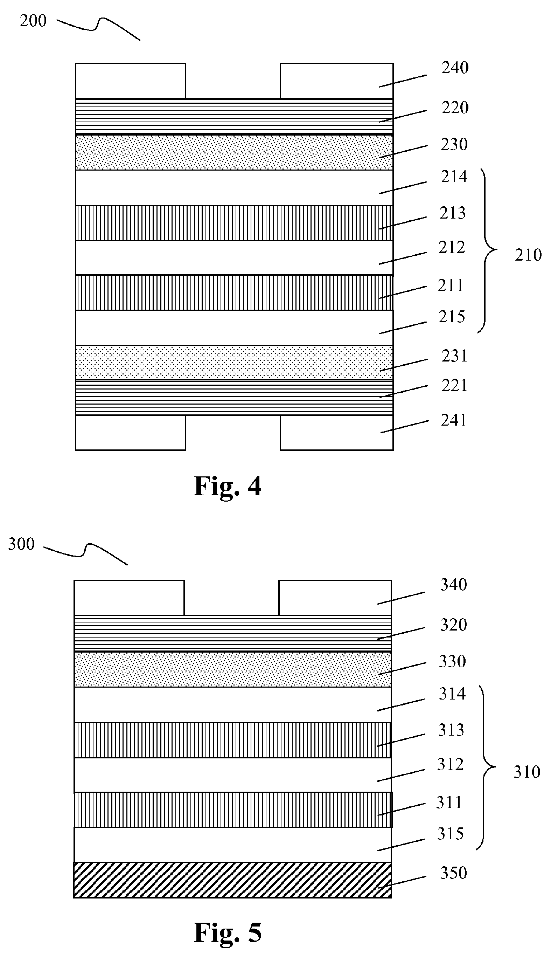

Fig. 4 schematically shows a symmetrical structure of a light collector 200. In particular, the light collector 200 comprises an OLED 210 in the very middle. The OLED 210 comprises a first and a second electrode 213, 211, an organic optoelectronic material 212 sandwiched between the electrodes 231, 211, a first cover 214, and a second cover 215. The components of the OLED 210 may provide the same properties as discussed above with reference to Fig. 2 or 3, besides the fact that the second electrode 211 is not a reflecting electrode, but a light transmitting electrode. Further, the light collector 200 comprises a first luminescent material 220 contacting a first light diffusing layer 230 which is adjacent to the first cover 214. Furthermore, a second light diffusing layer 231 is provided between the second electrode 215 and a second luminescent material 221. Both, the first and the second luminescent materials contact a discontinuous semi-transparent layer 240, 241, respectively. Such a structure of the light collector 200 enables a two-side emission of light so that -for example - the brightness of two sides of a signage panel may be enhanced.

In an embodiment of the invention, the above symmetrical structure may be modified so that at least one of the light diffusing layers 230, 231 is replaced by an out-coupling structure as described in Fig. 2. Such an out-coupling structure may be arranged in the second portion(s) of the luminescent material element(s) 220, 221 as described above so that the luminescent material element(s) 220, 221 contact the first and second cover 214, 215, respectively.

Fig. 5 schematically shows a light collector 300 comprising an OLED 310 having two transparent electrodes 313, 311 and an organic optoelectronic material 312 therebetween. The first electrode 313 contact a first cover 314, and the second electrode contacts a second cover 315. A luminescent material element 320 is provided between the OLED 210 and a discontinuous semi-transparent layer 340. Further, a light diffusing layer 330 is arranged between the luminescent material element 320 and the OLED 210, whereas the light diffusing layer 330 may be replaced by an out-coupling structure present at the portion of the luminescent material element 320 not covered by the semi-transparent layer 340 as discussed above.

Further, the light collector 300 may comprise a solar cell 350 contacting the OLED at a side opposite to the luminescent material element 320. For example, the solar cell 350 may contact the second cover 315. In an alternative example, the light collector does not comprise the solar cell 350, but a solar cell 350 may be provided together with a light collector in a signage panel system. The solar cell can advantageously energize the OLED or any other light generating means so that essentially no further energy is needed to operate the signage panel system.

In each of the above-discussed examples, the OLED may be replaced by a transparent sheet into which the additional light is in-coupled in a direction parallel to the interface between the luminescent material element and the transparent sheet. In doing so, a side in-coupling of light is provided to supplement the light emission from the luminescent material element.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one". A single processor or other unit may fulfill the functions of several items recited in the claims. The mere fact that certain measures are recited in mutually different dependent claims does not indicate that a combination of these measures can not be used to advantage. Any reference signs in the claims should not be considered as limiting the scope.

## Claims

1. Light collector (1) comprising
a luminescent material element (20),
a discontinuous semi-transparent layer (40) adjacent to a first side of the luminescent material element (20), wherein due to the discontinuity of the semi-transparent layer (40) at least one first portion (21) of the luminescent material element (20) covered by the semi-transparent layer (40) and at least one second portion (21) of the luminescent material element (20) not covered by the semi-transparent layer (40) are formed,
a light generating means (10) arranged at a second side of the luminescent material element (20).

2. Light collector of claim 1, wherein the light generating means (10) is an organic light emitting diode (OLED) or a transparent sheet having side in-coupling with a lamp.

3. Light collector of claim 1, wherein the discontinuous semi-transparent layer (40) provides a pre-determined pattern.

4. Light collector of claim 1, wherein the light collector (1) comprises an out-coupling structure (30).

5. Light collector of claim 4, wherein the out-coupling structure (30) is provided at at least one second portion (22) of the luminescent material element (20).

6. Light collector of claim 4, wherein the out-coupling structure (30) is a light diffusing layer arranged between the luminescent material element (20) and the light generating means (10).

7. Light collector of claim 1, wherein the light generating means (10; 210) is arranged between the luminescent material element (20; 220) and a further luminescent material element (221).

8. Light collector of claim 7, further comprising a second discontinuous semi-transparent layer (241), and wherein the second luminescent material element (221) is arranged between the light generating means (10; 210) and the second discontinuous semi-transparent layer (241).

9. Light collector of claim 8, further comprising a second out-coupling structure (231) adjacent the luminescent material element (221).

10. Signage panel comprising at least one light collector (1) of one of the preceding claims.

11. Signage panel comprising a luminescent material element (20) on an OLED (10) or on a transparent sheet having side in-coupling with a lamp.

12. Signage panel of claim 11, wherein the luminescent material element (20) and the light generating means (10) are provided in a layered configuration, and the luminescent material element (20) covers a light incident side of the light generating means (10; 310).

13. Signage panel of claim 12, further comprising a solar cell (350) adapted so energize the light generating means (310).

14. Signage panel system comprising at least one signage panel of claim 10 or 13, a light sensor adapted to determine the light condition of an environment (of the signage panel), and adjusting means adapted to control light emission of the signage panel depending on the result of the determination of the light condition.

15. Method for concentrating light (2) in a light collector (1), comprising capturing light from the environment by means of a luminescent material (20),
concentrating the light in the luminescent material (20) by means of a semi-transparent layer (40) arranged on the luminescent material (20) and light generating means (10),
emitting the light in a pre-determined area (22) of the light collector (1) by means of an out-coupling structure (30) so as to generate a pre-determined light emitting image.
